# EUROPEAN PATENT APPLICATION

(11) **EP 4 234 346 A1**
(43) Date of publication of application: **30.08.2023**
(21) Application number: 22214446.1
(22) Date of filing: 19.12.2022
(51) Int. Cl.: B60T 7/20, B60T 15/18, B60T 13/26, B60T 13/66, B60T 13/68

(54) **IMPROVED BI-STABLE VALVE**

(30) Priority: 24.02.2022 EP 22158477
(71) Applicant: KNORR-BREMSE Systeme für Nutzfahrzeuge GmbH, 80809 München (DE)
(72) Inventor: KONCZ, Laszlo, 6000 Kecskemét (HU); NAGY, Tibor, 5502 Gyomaendrod (HU); PATIL, Sushant, 415002 Satara (IN); FARKAS, Gabor, 6000 Kecskemét (HU); BANE, Shivram, 416510 Maharashtra (IN)

(57) **Abstract**

A valve arrangement (1), e.g. for the use in a park brake system of a commercial vehicle or trailer, comprises:
a differential piston (2), comprising a first section (2a) and a second section (2b),
wherein the second section (2b) has a smaller diameter compared to the first section (2a), wherein there is a fluidic connection (3) between the first section (2a) and the second section (2b),
a housing (4) with a bore (5), in which the differential piston (2) is adapted to move, wherein the bore (5) has at least two sections (5a, 5b), wherein the first section (5a) corresponds to the diameter of the first section (2a) of the differential piston, and the second section (5b) corresponds to the diameter of the second section (2b) of the differential piston, wherein a step (5c) is formed between the first section (5a) and second section (5b) of the bore (5),
wherein a first passage (6) and a second passage (7) are arranged and axially spaced in the bore (5), and a third passage (8) is arranged in or next to the second section (5b) of the bore (5),
wherein when the differential piston (2) is in a first end position, the second section (2b) of the differential piston (2) rests against the step (5c), and a connection of the first passage (6) and the second passage (7) within the bore (5) is provided,
and wherein when the differential piston (2) is in a second end position, a connection of the first passage (6) and the second passage (7) within the bore (5) is blocked.

## Description

The present application relates to a bi-stable valve assembly, which can for example be used in a park brake system, in particular for commercial vehicles or utility vehicles.

Commercial vehicles and utility vehicles have a park brake, in particular a park brake of a trailer. Such brake is usually actuated by a park brake actuator which has a spring, and the park brake is actuated if the spring presses brake pads against the brake disc or blocks a drum of a drum brake. A release of the park brake can be performed if pressurized air is introduced into the park brake actuator, when the pressurized air is able to overcome the force of the spring, so that the spring is moved in its tensioned state, and the brake pads are moved away from the brake discs or drum of a drum brake are unblocked.

Bi-stable park brake valves are known from prior art, in particular electrically actuated valves being adapted to connect a parking brake selectively to supply pressure or atmospheric pressure, in order to actuate or release the park brake.

From prior art, document EP 3 150 450 A1 is known, disclosing a vehicle braking system comprising a supply line which is adapted to be connected to a supply of pressurized fluid, a pressurized fluid reservoir, a parking brake actuator assembly including a brake actuator having a spring brake chamber, a pilot operated emergency brake apply valve with an inlet which is connected to the pressurized fluid reservoir, an outlet which is connected to the spring brake chamber by a spring brake line, and a control inlet connected to an emergency braking control line. The emergency brake apply valve is movable in accordance with the pressure at its control inlet between a first position in which its inlet is connected to its outlet and a second position in which its inlet is closed and its outlet vents to a low pressure region.

The spring brake chamber is operable such that the supply of pressurized fluid to the spring brake chamber causes the brake actuator to move to a brake release position and the release of pressurized fluid from the spring brake chamber causes the brake actuator to move a brake apply position. Further, a pressure transducer is provided in the emergency braking control line, and when the supply line is pressurized, the pressure sensor is directly connected to the pressurized fluid reservoir.

Furthermore, document EP 2 207 260 A1 is known from prior art, in which the parking brake vale has a movable piston loaded by a spring, and the piston has two coaxial piston faces which delimit the first space and the second space. The first space, dependent on the position of the piston, can be impacted with the supply pressure, atmospheric pressure or a pressure level lying between these two pressures. The pressures can be fed to the outlet of the parking brake valve, and the second space can be connected by an electrically actuated valve, selectively to increase pressure or atmospheric pressure.

However, for such system, numerous electrically actuated relay valves or solenoid valves are required in order to control the park brake valve and also the park brake, which is regularly a spring brake. Such park brake is furthermore not safe against malfunction or accidental actuation, caused by which a trailer might roll away. Furthermore, such system is not safe against emergency actuation, which could occur during driving and which would lead to the blocking of the wheels during driving.

It is hence a technical problem of the present application to provide a valve arrangement, in particular park brake valve, which is only pneumatically actuated, reduces space, wiring and solenoid valves. Another problem can be seen in an easy actuation of the valve arrangement, in particular park brake valve, in particular when a trailer is coupled to a commercial vehicle or release from it.

The technical problem of the present application is solved by a valve arrangement according to claim 1. Further advantageous embodiments of the present application are subject-matters of the dependent claims.

The valve arrangement according to the present invention comprises:
A differential piston which comprises a first section and a second section, wherein the second section has a smaller diameter compared to the first section, but where there is a fluidic connection between the first section and the second section. Furthermore, the valve arrangement comprises a housing with a bore, in which the differential piston is adapted to move. The bore has at least two sections, wherein the first section corresponds to the diameter of the first section of the differential piston, and the second section corresponds to the diameter of the second section of the differential piston. A step is formed between the first section and the second section of the bore.

A first passage and a second passage are arranged and axially spaced within the bore, and a third passage is also arranged in or next to the second section of the bore. When the differential piston is in the first end position, the second section of the differential piston rests against the step, and a connection between the first passage and the second passage within the bore is provided.

When the differential piston is in the second end position, a connection of the first passage and the second passage within the bore is blocked.

If the connection of the first passage and the second passage within the bore is blocked, this is a so-called safe park position, if the valve is used in a park brake system. When the differential piston is in the first end position and the connection of the first passage and the second passage is provided within the bore, said position can be used for the driving position if used in a park brake system.

The first section with the bigger diameter is highly throttled as fluid can only be delivered to this part via a throttled fluidic connection, where the part with a smaller diameter is not throttled (as the third port is provided in the bore close to this section). If there is a short pressure impulse in the third passage, the piston is switched from the first end position to the second position due to the forces of the pressure on the differential piston, i.e. its second side. However, if the pressure impulse is long enough, the second section of the bore is filled with pressurized air by the throttled fluidic connection (through the differential piston), and the pressure will act on the first section of the differential piston, which however has a larger area compared to the second section. Hence, the piston moves to the first end position again.

The third passage has the function of a pilot port or control port, which can be controlled by only one solenoid valve, and only the switching time of the solenoid valve is decisive for the position into which the differential piston is moved. The advantage is that the only one solenoid valve is required to switch the piston from one position to the other position. Due to the necessity of only one solenoid valve, less wiring is necessary for the valve. It is used as a safety valve for a park brake, such valve arrangement is more compact and less prone to malfunction (for example be defects of wiring, solenoid valves or other valves).

Preferably, there is an additional fourth passage arranged in the first section of the bore, which allows the insertion of pressurized fluid into the first section of the bore.

With such arrangement, the position of the differential piston can be pushed from the second end position to the first end position (independent of a pressure in the third passage), hence providing a connection of the first passage to the second passage within the bore.

When used in a park brake system, such arrangement is used if a manual reset is desired, in particular if a trailer has to be moved. Furthermore, if no pressure signal from the third passage is available, the fourth passage can at least change the position of the differential piston from the second end position and the first end position.

Preferably, the differential piston further comprises a third section, wherein when the differential piston is in a first end position, the third section of the differential piston provides a connection of the passage and the second passage within the bore, and wherein, when the differential piston is in the second end position, the third section of the differential piston blocks a connection of the first passage and the second passage within the bore.

Such third section of the differential piston can be realized very easily, as the differential piston is a non-complex element. Further, the blocking and connecting of the connection between the first passage and the second passage is very easy and very safe.

Preferably, the third section of the differential piston has a smaller diameter compared to the first / second section of the differential piston and/or the first /second section of the bore (depending on whether the third section of the differential piston is arranged next to / within the first or second section of the differential piston).

There is a space within the bore not being blocked by a part of the differential piston, which can hence provide a connection of the first port and the second passage.

Again, such solution is very easy and cheap to fabricate.

Alternatively, an axial groove is arranged in the third section of the differential piston. When the differential piston is in a first end position, the axial groove is arranged covering the first port and the second port, and the axial groove can establish a connection between the first port and the second port.

Preferably, the fourth passage is connected to a fourth port via a first check valve, which only allows a flow from the fourth port to the fourth passage.

Herein, it can be ensured that no pressurized air will leave the bore through the fourth passage, and it can be guaranteed that only pressurized air enters the fourth passage in one direction (i.e. towards the bore), that means only if the differential piston should be moved from the second end position to the first end position.

Preferably, the first port and the second port are connected outside of the bore by a second check valve, which only allows a flow of pressurized air from the second passage to the first passage. However, there is a bypass which is controlled by the position of the differential piston.

The valve can be used to disable the flow in one direction (between the first passage and the second passage), but flow in the other direction is possible through the bore if the differential piston is in the first end position. In other words: When the differential piston is in a first end position, a connection of the first port and the second port is provided within the bore. Hence, a bypass of the second check valve is enabled. In a second end position of the differential piston, said bypass is blocked, and a fluid can only flow from the second passage to the first passage, but not in the reverse direction.

Such valve can switch into two positions (enabling connection of the first passage and the second passage in one flow direction, wherein flow in the other flow direction is always possible) with only one solenoid valve, which is very easy and cheap to implement. Wiring and control of a solenoid valve can be minimized. Such valve is in particular useful for safety valves for a parking brake.

Preferably, the bore, the differential piston and the first check valve, optionally also the second check valve, are accommodated in a common housing.

This reduces the wiring necessities even more, and the first check valve does not need any more wiring, and furthermore, a very compact valve arrangement is possible.

Preferably, the fluidic connection between the first section and the second section of the differential piston is realized by a channel and/or a hollow pin through the differential piston.

More preferably, the channel and/or the hollow pin in the differential piston is or are the only fluidic connection between the first section and the second section of the bore, independent in which end position the differential piston is.

That means that fluid from the third passage, being connected to the a pilot / control port, cannot be lead to the first passage or the second passage. Hence, two different pressure levels can be realized within the valve, without interfering each other.

Preferably, the diameter of the channel and / or a hollow pin in the differential piston 2 is below 5 mm, preferably below 3 mm, even more preferably below 1.5 mm, and/or the ratio of the width of the channel and/or hollow pin on the one hand and the diameter of the second section of the differential piston on the other hand is below 1:5, more preferably below 1:8, even more preferably below 1:10 and furthermore preferably below 1:20.

Hence, only a very small hole has to be drilled, easily realizing the throttling of air flowing to the second section of the bore which will then act against a second section of the differential piston.

Furthermore, the hollow pin has a throttle functionality - for example, an air pulse of larger than 0 m/s up to 10 m/s will push the differential piston from the first end position into the second end position, whereas an air pulse of 20 m/s or longer will push the differential piston from the second end position to the first end position. This is realized as at first, only the small side of the differential piston is pressurized, and with the pressure force of the pulse, the differential piston is moved to the second end position. However, if the air pulse is long enough, the pressure can equilibrate within the whole bore (through channel / hollow pin), as it will get through the hollow pin to the side where the larger area of the differential piston rests. As there is a larger area which can interact with the pressure, the differential piston will move back again to the first end position.

Preferably, a locking means pre-tensioned by a spring is provided that the bore, and the locking means is adapted to be releasably pressed against the differential piston.

Such locking is preferably done in the first end position, which may be used as the driving position if used in a park brake system. Said locking means enables a clearer differentiation of situations of pulses of pressurized air through the third port - as a longer pulse of pressurized air is needed to move the differential piston from the second end position to the first end position compared to a state without a locking means - hence, there can be a clear differentiation with regard to the length of the air pulses, without two states interfering with each other.

Preferably, the pre-tensioning of the spring can be adjusted by a screw.

That enables the adjusting of the required durations of an air pulse for switching off the differential piston between its two end positions even more.

Preferably, the third passage is connected to the third port, through which fluid pulses of different ranges are insertable. Such fluid is a control port port, which is connectable via an electronic brake system.

Preferably, the valve arrangement is integrally formed with an electronic brake control module.

Such embodiment is very easy to implement, and two housings are not needed in this case.

Preferably, the first section of the bore and the third passage are connected via an internal connection, wherein a third check valve is provided within an internal connection, only allowing the flow of air from the first section of the bore to the third passage, wherein the internal connection optionally leads through an internal pocket.

This allows the exhaust of air from the first section of the bore in order to equilibrate the pressures on both sides of the differential piston. The internal pocket increases the air volume in the first section of the bore, reduces pressure peaks there and allows a more robust operation even with short pressure signals through the third passage.

Preferably, a first port is connected to the first passage, and a second port is connected to the second passage. The ports allow the communication with other components, e.g. of a park brake system.

Preferably, the first port is connected to a park and shunt valve, the second port is connected to an electronic brake module, and the third port is connected to a control port. Only one solenoid valve in the electronic brake module is necessary, and the state of the differential piston within the valve arrangement is only controlled by the duration of the air pulse by the third passage.

Preferably, a double-check valve is further provided, one side of the double-check valve is connected to the third port, and the other side of the double-check valve is connected to the second passage, and the second port is connected with either the second passage or the third port by the double-check valve. The second port is connected to the second passage of the pressure and the second passage is higher compared to the third port, and the second port is connected with the third port of the pressure and the third port is higher compared to the second passage.

That means, if the pressure in the second passage is decreasing too much (e.g. by a leak though which pressure can escape), this pressure signal may be overwritten if there is still a control signal in the third port. This signal would be provided continuously, not only as a short pressurized air pulse. Hence, if used as a park brake, the park brake will not actuate during the trailer is driving.

Previously, the double-check valve is provided in the same housing as the differential piston.

Such solution is very compact and easy to manufacture.

Preferably, the first port is connected to a park and shunt valve, the second port is connected to an electronic brake module, and the third port is connected to a control port. Only one solenoid valve in the electronic brake module is necessary, and the state of the differential piston within the valve arrangement is only controlled by the duration of the air pulse by the third passage.

In the following, preferred embodiments of the present invention are described more in detail by the accompanying drawings.
- Fig. 1: shows a partial sectional view of a valve arrangement according to a first embodiment of the present invention.
- Fig. 2: shows an isometric view from the side on the valve arrangement according to the first embodiment of the present invention.
- Fig. 3: shows another partial sectional view on the valve arrangement according to the first embodiment of the present invention.
- Fig. 4: shows a sectional view of a second embodiment of a valve arrangement according to the present invention.
- Fig. 5: shows a detailed view on the double-check valve as used in the second embodiment of the present invention.
- Fig. 6: shows a partial sectional view on a valve arrangement according to a second embodiment of the present application.
- Fig. 7: shows an isometric side view on the valve arrangement according to a second embodiment of the present invention.
- Fig. 8: shows a pneumatic circuit diagram of a valve arrangement according to a second embodiment of the present invention, used as a park brake valve.
- Fig. 9: shows an electronic brake module and a valve arrangement according to the present invention being integrally formed.

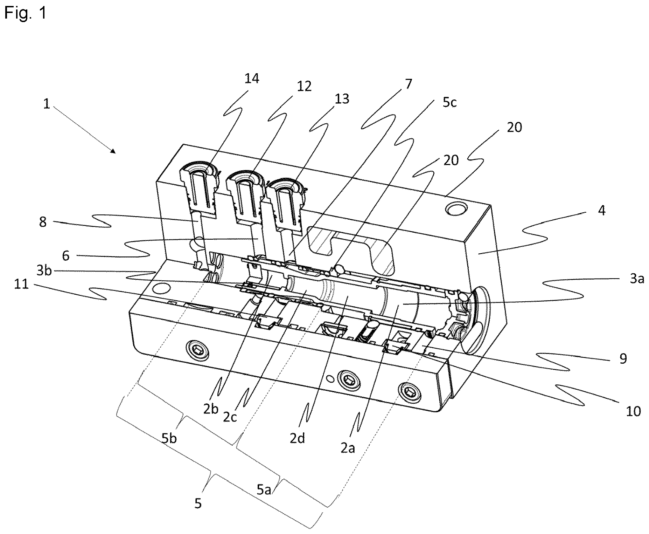

In Fig. 1, a partial sectional view of a valve arrangement 1 according to a first embodiment of the present application is shown. A housing 4 contains a bore 5, which has a first section 5a and a second section 5b. A step 5c is provided between the first section 5a and the second section 5b, as the first section 5a has a larger diameter compared to the second section 5b. Within the bore 5, a differential piston 2 (not explicitly labelled in Fig. 1) is arranged, which has a first section 2a, a second section 2b, a third section 2c and a fourth section 2d. On the right side, there is the first section 2a with the largest diameter, then a step follows, and a fourth section 2d follows, and then a third section 2c will follow, with an even decreased diameter compared to the fourth section 2d, and then a second section 2b follows. The second section 2b has a smaller diameter compared to the first section 2a, but the same diameter as the fourth section 2d.

The axial length of the first section 2a of the differential piston 2 is smaller compared to the first section 5a of the bore 5 - so that the differential piston 2 can move within the bore 5.

Within the housing 4, a first port 12, a second port 13 and a third port 14 are visible. The first port 12 is connected to a first passage 6, the second port 13 is connected to a second passage 7, and the third port 14 is connected to a third passage 8.

The first passage 6 and the second passage 7 are connected with the second section 5b of the bore 5. In Fig. 1, the second section 2b of the differential piston blocks the connection of the first passage 6 and the second passage 7 within the second section 5b of the bore 5. The differential piston 2 is in the second end position.

In the first end position (not shown in Fig. 1), the third section 2c of the differential piston 2 (with a smaller diameter compared to the second section 2b) would be positioned in the region where the first channel 6 and the second channel 7 are connected with the second section 5b of the bore 5 - hence allowing a connection between the first passage 6 and the second passage 7 within the bore 5.

Furthermore, there is a second check valve 11 arranged between the first passage 6 and the second passage 7, however, it is only possible to open said second check valve 11 if the pressure in the second passage 7 is higher compared to the first passage 6.

Furthermore, an air pocket 20 is visible within the housing 4.

Furthermore, there is a first check valve 7, which is connected to the fourth passage 9. The fourth passage 9 is connected to the first section 5a, i.e. the section with the larger diameter of the bore 5.

On the other hand, the third passage 8 is connected to the second section 5b, which is the section with the smaller diameter of the bore 5 - more precisely with its left end.

In the first check valve 10, air can only flow towards the fourth passage 9 and hence the first section 5a of the bore 5, but not in the other direction. The first check valve 10 is furthermore connected with the fourth port 15 (not shown in this embodiment).

The differential piston 2 is hollow - forming a channel 3a, which comprises a highly throttled hollow pin 3b. Hence, if a short pulse of air is inserted through the third passage 8, the differential piston 2 will move to the right side (second end position) - as depicted in Fig. 1. However, if a longer air pulse is inserted through the third passage 8, the pressure can propagate through the hollow pin 3b and reach the first section 5a of the bore 5 - as the first section 2a of the differential piston 2 has a higher diameter compared to the second section 2b, a higher area is present onto which the pressure can act - and hence the piston would move to the left side (first end position) - not shown in Fig. 1. However, pressurized air can also be inserted to the first section 5a of the bore 5 directly via the fourth passage 9 - hence, the piston would move to the left side (first end position).

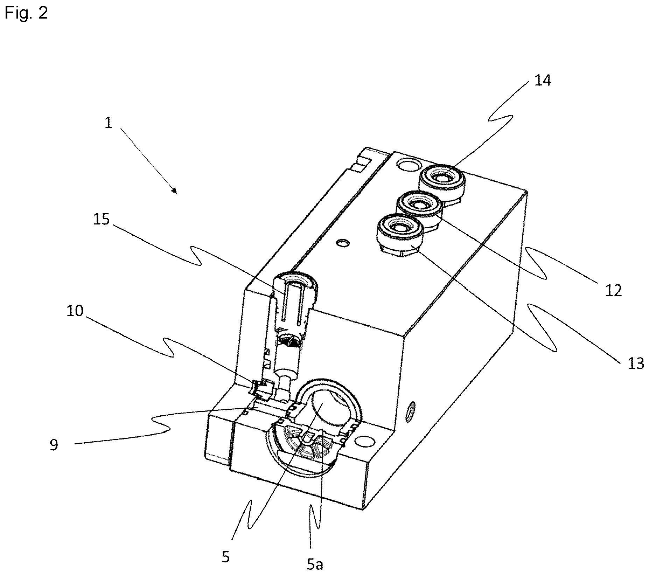

In Fig. 2, an isometric side-view of a valve arrangement 1 according to a first embodiment of the present application is shown. Again, the first port 12 and the second port 13 and the third port 14 are visible. Also, the bore 5 is partially visible. Herein, the function of the first check valve 10 is further explained: Air can flow from a fourth port 15 through the check valve 12, and then can enter the fourth passage 9, but no air can flow in the different direction. Hence, pressurized air can reach the first section 5a of the bore 5.

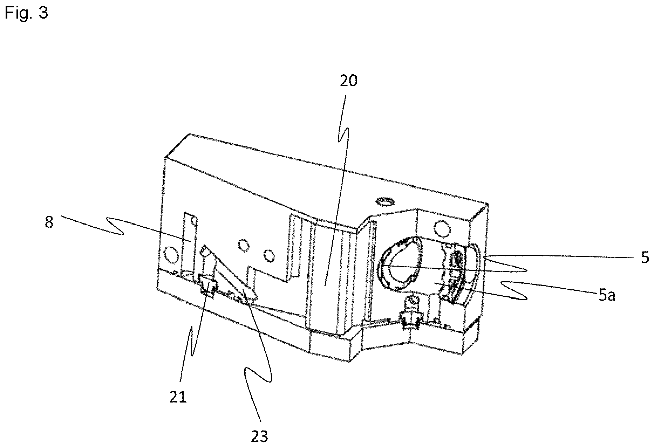

In Fig. 3, another partial sectional view of a valve arrangement 1 according to a first embodiment of the present application is shown. Herein, it is visible that there is an internal connection 23 between the first section 5a of the bore 5 and the third passage 8, which leads through an internal pocket 20, which is a cavity with a defined volume.

Furthermore, there is a third check valve 21 which only allows a flow of air from the first section 5a of the bore 5 to the third passage 8 (i.e. which only opens if the in the pressure first section 5a of the bore 5 is higher compared to the third passage 8).

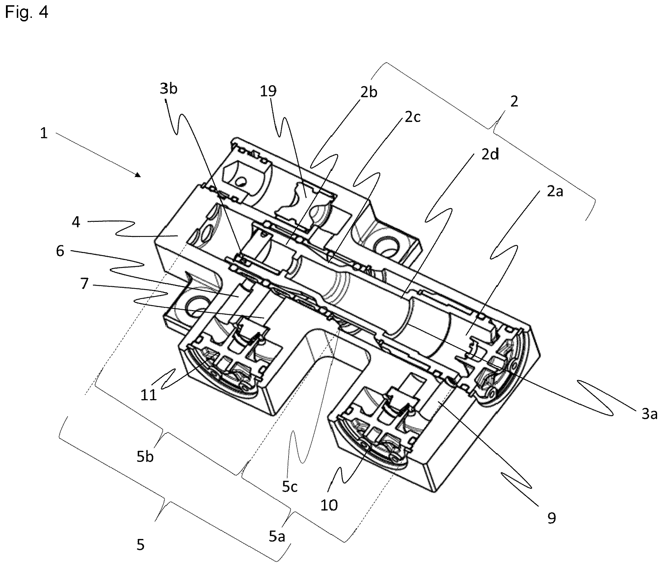

Fig. 4 shows a sectional view of a valve arrangement 1 according to a second embodiment of the present application. The position of the differential piston 2 with the first section 2a, the second section 2b, the third section 2c and the fourth section 2d is identical to Fig. 1, as well as the arrangement of the bore 5 in the first section 5a and the second section 5b. Also, the first passage 6 and the second passage 7 and the fourth passage 9, the first check valve 10 and the second check valve 11 and the channel 3a and the hollow pin 3b are identical to the first embodiment. The difference is that the top part of the housing 4, a double-check valve 19 is provided, acting as a pressure selector valve

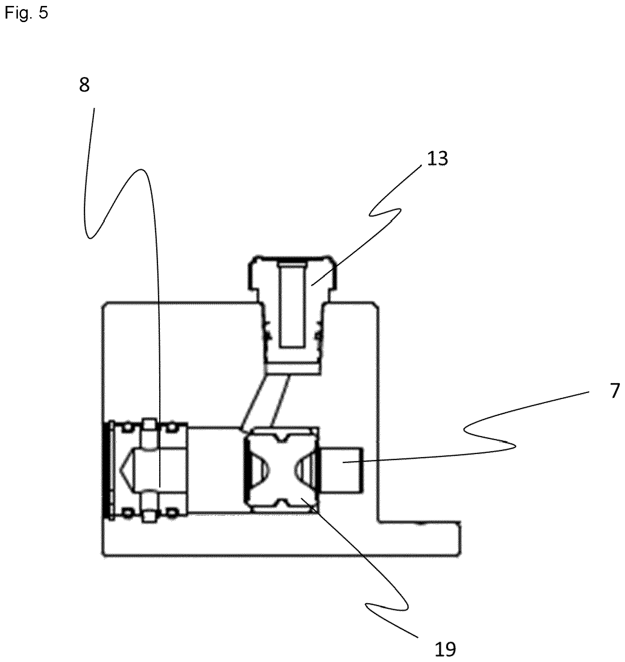

Fig. 5 shows the double-check valve 19 more in detail. In one position (as shown in Fig. 5), the double-check valve 19 connects the third passage 8 with the second port 13. In the other position (not as shown in Fig. 5), the double-check valve 19 connects the second passage 7 with the second port 13. Depending on whether the pressure and the second passage 7 or the third passage 8 is larger, a connection is made to the second port 13.

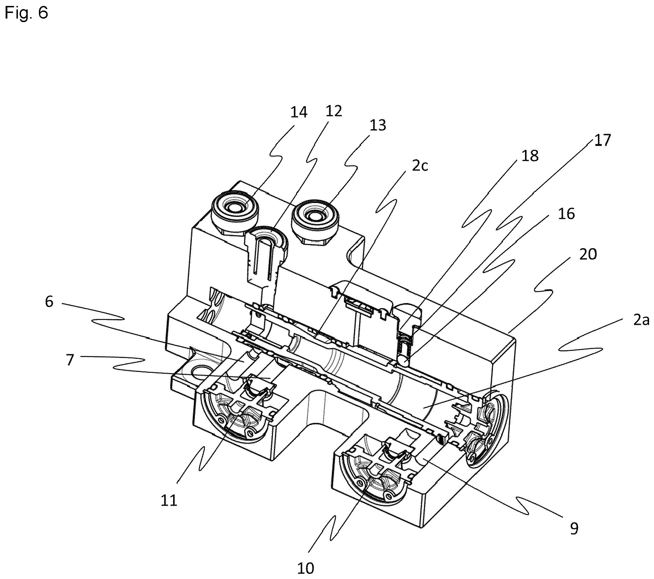

Fig. 6 shows a partial sectional view of a valve arrangement 1 according to a second embodiment of the present application. Herein, the structure of the first port 12 is visible more in detail, as well as the structure of the second port 13. The first port 12 is connected to the first passage 6. Also it is shown that a locking means 16, which is a bore, is provided in the bore 5, and the locking means 16 is locked by a spring 17, which is adjusted by a screw 18. Herein, the position of the differential piston 2 can be locked, i.e. there is a higher force necessary in order to move the differential piston 2. All other parts are the same as in Fig. 5.

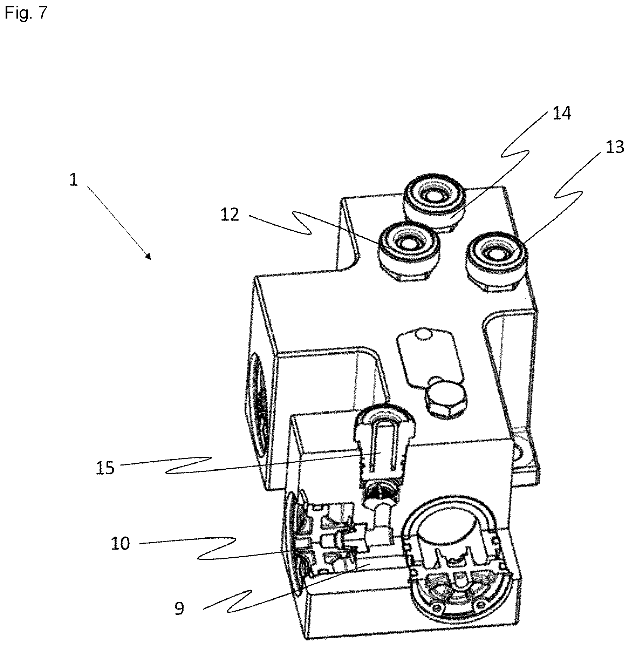

Fig. 7 again shows an isometric side-view and a valve arrangement 1 according to a second embodiment of the present application. Again, it is visible that the fourth port 15 is present, which is connected to a first check valve 10. If air enters the first check valve 10 from the first port 15, the first check valve 10 opens and air can get via the fourth passage 9 into the first section 5a of the bore. Hence, the differential piston 2 can be moved independently of whether there is a pressure pulse in the third passage 8 (not shown in Fig. 7).

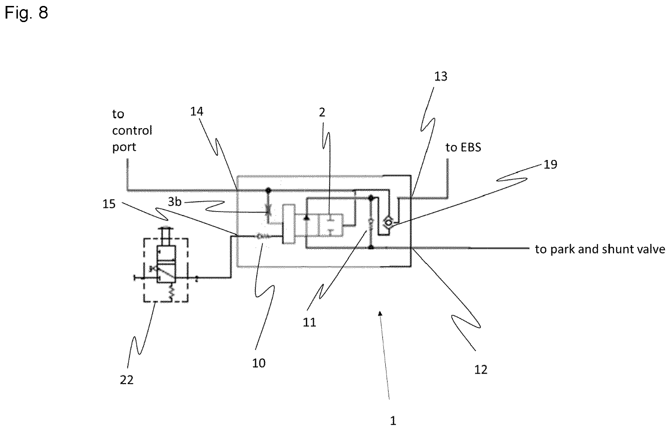

Fig. 8 shows a pneumatic circuit diagram of a valve arrangement 1 according to a second embodiment of the present invention, used as a park brake valve. Herein the driving position is shown, which corresponds to the first end position. Herein, a connection of the first port 12 and the second port 13 is realized via the differential piston 2 - a flow of air is possible in both directions. If the differential piston 2 would be in the second end position (not shown in Fig. 8), only an air flow into the direction from the second port 13 to the first port 12 would be possible. The third port 14 is connected to a control port, through which different air pulses can be inserted. Because of the hollow pin 3b (throttle), the duration of the air pulses decides about the position of the differential piston 2.

Herein, the first port 12 is connected to a park and shunt valve, and the second port 13 is connected to an electric brake module EBS. The third port 14 is connected to a control port, and the fourth port 15 is connected to a reset button 22. The first check valve 10 allows air pulses from the reset button 22 to the differential piston 2, which would move it to the first end position, which is the driving position. The double-check valve 19 decides which port (third port 14 or first port 12) is connected to the second port 13, leading to the EBS. If the pressure in the third port 14 is higher compared to the first port 12, the third port 14 and the second port 13 are connected - if the pressure in the first port 12 is higher compared to the third port 14, the first port 12 and the second port 13 are connected. If the pressure at the first port 12 is decreasing, the pressure at the second port 13 follows, as the second check valve 11 opens. In this case, the park brake (emergency brake) of a trailer of a utility vehicle can be actuated, but depending on a software logic, it could be overridden. Such override is possible in case of an existing electric connection. If the pressure at the first port 12 is smaller than the pressure at the third port 14, the double-check valve 19 separates the first port 12 and the second port 13. At the same time, the third port 14 is connected with the second port 13 therefore the EBS system is pressurized by system pressure from e.g. a reservoir of the trailer. In this case, a short pressurized air pulse is used for switching to the safe park position, a longer signal is used for switching to the drive position, and a permanent signal is used for emergency override

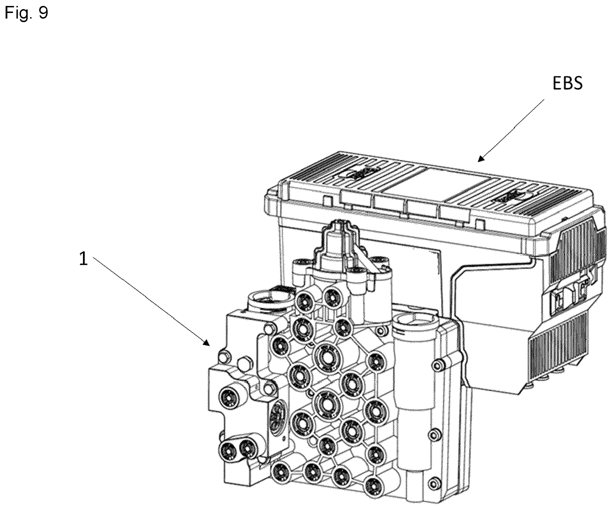

Fig. 9 shows an electronic brake module EBS and a valve arrangement 1 according to the present invention being integrally formed, leading to a compact part.

The present invention is not limited to the above mentioned embodiments. The differential piston 2 can have more sections, as well as the bore 5.

### LIST OF REFERENCE SIGNS

- 1: valve arrangement
- 2: differential piston
- 2a: first section
- 2b: second section
- 2c: third section
- 2d: fourth section
- 3: fluidic connection
- 3a: channel
- 3b: hollow pin
- 4: housing
- 5: bore
- 5a: first section
- 5b: second section
- 5c: step
- 6: first passage
- 7: second passage
- 8: third passage
- 9: fourth passage
- 10: first check valve
- 11: second check valve
- 12: first port
- 13: second port
- 14: third port
- 15: fourth port
- 16: locking means
- 17: spring
- 18: screw
- 19: double check valve
- 20: pocket
- 21: third check valve
- 22: reset button
- 23: internal connection

- EBS: electronic brake control module
- POS: park and shunt valve
- C: control port

## Claims

1. Valve arrangement (1), comprising:
a differential piston (2), comprising a first section (2a) and a second section (2b), wherein the second section (2b) has a smaller diameter compared to the first section (2a), wherein there is a fluidic connection (3) between the first section (2a) and the second section (2b),
a housing (4) with a bore (5), in which the differential piston (2) is adapted to move, wherein the bore (5) has at least two sections (5a, 5b), wherein the first section (5a) corresponds to the diameter of the first section (2a) of the differential piston, and the second section (5b) corresponds to the diameter of the second section (2b) of the differential piston, wherein a step (5c) is formed between the first section (5a) and second section (5b) of the bore (5),
wherein a first passage (6) and a second passage (7) are arranged and axially spaced in the bore (5), and a third passage (8) is arranged in or next to the second section (5b) of the bore (5),
wherein, when the differential piston (2) is in a first end position, the second section (2b) of the differential piston (2) rests against the step (5c), and a connection of the first passage (6) and the second passage (7) within the bore (5) is provided,
and wherein when the differential piston (2) is in a second end position, a connection of the first passage (6) and the second passage (7) within the bore (5) is blocked.

2. Valve arrangement (1) according to claim 1, wherein there is a fourth passage (9) arranged in the first section (5a) of the bore (5), which allows the insertion of pressurized fluid into the first section (5a) of the bore (5).

3. Valve (1) according to claim 1 or 2,
wherein the differential piston (2) further comprises a third section (2c),
wherein, when the differential piston (2) is in a first end position, the third section (2c) of the differential piston (2) provides a connection of the first passage (6) and the second passage (7) within the bore (5),
and wherein, when the differential piston (2) is in a second end position, the third section (2c) of the differential piston blocks a connection of the first passage (6) and the second passage (7) within the bore (5).

4. Valve arrangement (1) according to claim 3, wherein the third section (2b) of the differential piston (2) has a smaller diameter compared to the first section (2a) and/or the second section (2b) of the differential piston (2) and/or the first section (5a) and/or the second section (5b) of the bore (5).

5. Valve arrangement (1) according to one of claims 2 to 4, wherein the fourth passage (9) is connected to a fourth port (15) via a first check valve (10), which only allows a flow from the fourth port (15) to the fourth passage (9), wherein a reset button (22) is optionally connected to the fourth port (15) .

6. Valve arrangement (1) according to one the previous claims,
wherein the first passage (6) and the second passage (7) are connected outside of the bore (5) by a second check valve (11), which only allows a flow of fluid from the second passage (7) to the first passage (6).

7. Valve arrangement (1) according to claim 5 or 6, wherein the bore (5) accommodating the differential piston (2) and the first check valve (10), optionally also the second check valve (11), are accommodated in a common housing (20).

8. Valve arrangement (1) according to one of claims 1 to 7, wherein the fluidic connection (3) between the first section (2a) and the second section (2b) of the differential piston (2) is realized via a channel (3a) and / or a hollow pin (3b) through the differential piston (2).

9. Valve arrangement (1) according to claim 8, wherein the channel (3a) and / or a hollow pin (3b) in the differential piston (2) is/are the only fluidic connection between the first section (5a) and the second section (5b) of the bore (5).

10. Valve arrangement (1) according to one of claims 1 to 9 wherein a locking means (16) pre-tensioned by a spring (17) is provided at the bore (5), and the locking means (16) is adapted to be releasably pressed against the differential piston (2).

11. Valve arrangement (1) according to claim 10, wherein the pre-tensioning of the spring (17) can be adjusted by a screw (18).

12. Valve arrangement (1) according to anyone of the previous claims, wherein the third passage (8) is connected to a third port (14), through which fluid pulses of different duration are insertable.

13. Valve arrangement (1) according to anyone of the previous claims, which is integrally formed with an electronic brake control module (EBS).

14. Valve arrangement (1) according to anyone of the previous claims, wherein the first section (5a) of the bore (5) and the third passage (8) are connected via an internal connection (23), wherein a third check valve (21) is provided within the an internal connection (23), only allowing the flow of air from the first section (5a) of the bore (5) to the third passage (8), wherein the internal connection (23) optionally leads through an internal pocket (20).

15. Valve arrangement (1) according to one of the previous claims,
wherein a first port (12) is connected to the first passage (6), and a second port (13) is connected to the second passage (7).

16. Valve arrangement (1) according to claim 15, wherein the first port (12) is connected to a park and shunt valve (POS), the second port (13) is connected to an electronic brake module (EBS), and the third port (14) is connected to a control port (C).

17. Valve arrangement (1) according to anyone of claims 1 to 14, wherein a double check valve (19) is further provided, one side of the double check valve (19) connected to the third port (14), another side of the double check valve (19) being connected to the second passage (7), whereby the second port (13) is connected with either the second passage (7) or the third port (14),
and wherein the second port (13) is connected with the second passage (7) if the pressure in the second passage (7) is higher compared to the third port (14), and wherein the second port (13) is connected with the third port (14) if the pressure in the third port (14) is higher compared to the second passage (7), wherein the double check valve (19) is preferably provided in the same housing (20) as the differential piston (2).

18. Valve arrangement (1) according to claim 17, wherein the first port (12) is connected to a park and shunt valve (POS), the second port (13) is connected to an electronic brake module (EBS), and the third port (14) is connected to a control port (C).
